# EUROPÄISCHE PATENTANMELDUNG

(11) **EP 2 124 215 A1**
(43) Veröffentlichungstag der Anmeldung: **25.11.2009**
(21) Anmeldenummer: 08009193.7
(22) Anmeldetag: 19.05.2008
(51) Int. Cl.: G09F 21/04, G09F 23/00, B60N 3/02

(54) **Haltevorrichtung**

(71) Anmelder: Handvertisement GmbH, 22301 Hamburg (DE)
(72) Erfinder: Alpsuyu, Suzan, 22085 Hamburg (DE); Jefferson Rath, John, 22301 Hamburg (DE)
(74) Vertreter: Grebner, Christian Georg Rudolf

(57) **Zusammenfassung**

Die Erfindung betrifft eine Haltevorrichtung (10) mit einem Handgriffkörper (12) mit einer Handgriffmulde oder Handgrifföffnung (32), einer Befestigungsvorrichtung (14) und einer Verbindungsvorrichtung (16), mittels der der Handgriffkörper (12) mit der Befestigungsvorrichtung (14) verbunden ist, sowie ein Haltevorrichtungssystem.

Die Erfindung zeichnet sich dadurch aus, dass die Haltevorrichtung (10) eine Anzeigevorrichtung (18) aufweist, die wenigstens einen Bildschirm (20, 22) umfasst.

## Beschreibung

Die Erfindung betrifft eine Haltevorrichtung mit einem Handgriffkörper mit einer Handgriffmulde oder Handgrifföffnung, einer Befestigungsvorrichtung und einer Verbindungsvorrichtung, mittels der der Handgriffkörper mit der Befestigungsvorrichtung verbunden ist, sowie ein Haltevorrichtungssystem.

Gattungsgemäße Haltevorrichtungen werden in privaten und öffentlichen Verkehrsmitteln, Straßen-, Schienen-, Wasser und Luftfahrzeugen wie Bussen, Bahnen, S-Bahnen, Privatautos, Taxis, Wassertaxis etc. zur Sicherung von Fahrgästen auf Stehplätzen und Sitzplätzen verwendet. Derartige Haltegriffe sind auch in öffentlichen und privaten Gebäuden oder Hallen mit durchlaufender Personenfrequenz einsetzbar.

Bekannte Haltevorrichtungen umfassen einen Handgriffkörper mit einer Handgriffmulde oder Handgrifföffnung, der üblicherweise ergonomisch so geformt ist, dass sie einer Hand einen handbequemen Halt bieten. Haltevorrichtungen weisen außerdem eine Befestigungsvorrichtung auf, mittels der die Haltevorrichtung an einem Fixpunkt angebracht wird. Dabei handelt es sich in öffentlichen Verkehrsmitteln beispielsweise um waagerechte oder senkrechte Haltestangen, in Taxen um die Decke oder den Rahmen des Fahrzeuges.

Als Verbindungsvorrichtungen zwischen dem Handgriffkörper und der Befestigungsvorrichtung werden u. a. Schlaufen oder Riemen aus verschiedenen Materialien verwendet. Andere übliche Handgriffkörper sind mit einer Befestigungsvorrichtung angelenkt verbunden, so dass die Gelenkverbindung die Verbindungsvorrichtung darstellt.

Die der Erfindung zugrunde liegende Aufgabe besteht darin, einer Haltevorrichtung eine zusätzliche Funktionalität zu verleihen sowie ein Haltevorrichtungssystem zur Verfügung zu stellen, mittels dessen Haltevorrichtungen eine zusätzliche Funktionalität verliehen wird.

Diese Aufgabe wird durch eine Haltevorrichtung mit einem Handgriffkörper mit einer Handgriffmulde oder Handgrifföffnung, einer Befestigungsvorrichtung und einer Verbindungsvorrichtung, mittels der der Handgriffkörper mit der Befestigungsvorrichtung verbunden ist, gelöst, die dadurch weitergebildet ist, dass die Haltevorrichtung eine Anzeigevorrichtung aufweist, die wenigstens einen Bildschirm umfasst.

Der Sicherungs- und Haltefunktion der Haltevorrichtung wird auf diese Weise eine Informationsfunktion hinzugefügt. Der wenigstens eine Bildschirm dient dazu, Informationen in Form von Texten, Bildern, Abfolgen von Einzelbildern, Filmsequenzen oder ganzen Filmen darzustellen. Die dargestellten Informationen betreffen beispielsweise Werbeinformationen, Nachrichten, öffentliche Bekanntmachungen oder Informationen über Routenverläufe, Haltestelleninformationen, Fahrpläne oder Verspätungen öffentlicher Verkehrsmittel. Es sind auch beliebige Kombinationen von Werbeinformationen und anderen Informationen darstellbar. Die Daten liegen etwa in Form von JPEG-, BMP-, GIF-, DivX-, oder AVI-Dateien und ähnlichen Formaten vor.

Eine erfindungsgemäße Haltevorrichtung mit wenigstens einem Bildschirm ist ein effektiver und unmittelbarer Informationsüberträger. In öffentlichen Verkehrsmitteln halten sich Fahrgäste auf Stehplätzen mit einer Hand an einer solchen Haltevorrichtung fest und haben die dargestellte Information auf dem Bildschirm daher direkt vor Augen, in unmittelbarer Nähe ihrer eigenen Hand. Das Objekt, das den Bildschirm umfasst, wird direkt angefasst. So entsteht eine unmittelbare Verbindung zwischen dem Informationsempfänger und der in der Haltevorrichtung dargestellten Information, denn die optisch aufgenommenen Informationen vom Bildschirm werden mit haptischen Eindrücken verknüpft und bleiben daher besonders tief im Gedächtnis der Informationsempfänger, wie beim Lesen eines Buches, das ebenfalls in der Hand gehalten wird.

Da sich die Haltevorrichtung, an der sich ein Fahrgast bzw. Informationsempfänger festhält, und der Bildschirm in dessen intimer persönlichen Sphäre befindet, ist der Aufmerksamkeitsgrad beim Betrachten dieser Information auch größer als bei der Anbringung von Bildschirmen an zentralen Punkten beispielsweise eines Busses, einer S-Bahn oder eines Zuges.

In einer vorteilhaften Ausbildung der Haltevorrichtung ist die Anzeigevorrichtung zwischen dem Handgriffkörper und der Befestigungsvorrichtung angeordnet. Damit befindet sich der Bildschirm oberhalb der Hand, die den Handgriffkörper greift und ist so gut sichtbar.

Vorzugsweise ist die Anzeigevorrichtung in den Handgriffkörper, in die Verbindungsvorrichtung und/oder in die Befestigungsvorrichtung integriert. So wird eine kompakte und stoßfeste Bauweise realisiert.

Eine bevorzugte einfache Ausführung besteht darin, dass die Befestigungsvorrichtung in die Verbindungsvorrichtung integriert ist. In einem solchen Fall besteht die Verbindungsvorrichtung im einfachsten Fall aus einer aus Bussen bekannten Schlaufe, die um eine Haltestange geschlungen ist.

Wenn die Haltevorrichtungen vorteilhafterweise zwei Bildschirme umfassen, die an unterschiedlichen Seiten der Haltevorrichtung angeordnet sind, ist eine gute Sichtbarkeit der Haltevorrichtung gegeben.

Wenn die Haltevorrichtung vorteilhafterweise eine Stromquelle für den wenigstens einen Bildschirm umfasst, ist sie flexibel und einfach als stand-alone-Einheit einsetzbar. Wenn alternativ dazu die Haltevorrichtung einen Anschluss für eine Stromversorgung für den wenigstens einen Bildschirm umfasst, wird vorteilhafterweise die Haltevorrichtung einfacher ausgeführt, da die Notwendigkeit weiterer Komponenten in der Haltevorrichtung entfällt. Eine Stromversorgung findet vorteilhafterweise mit Gleichstrom, insbesondere 12 V, 1,25 A, statt.

Vorteilhafte alternative Ausbildungen der erfindungsgemäßen Haltevorrichtung bestehen darin, dass die Haltevorrichtung eine Datenverarbeitungseinrichtung zur Versorgung des wenigstens einen Bildschirms mit Daten umfasst und/oder, dass die Haltevorrichtung einen Anschluss für auf dem Bildschirm darzustellende Daten umfasst. Vorteilhafterweise ist eine Datenübertragung über Bluetooth, W-LAN, GPS, GPRS oder per USB-Port vorgesehen.

In der ersten Alternative sind die darzustellenden Daten bereits in der Datenverarbeitungseinrichtung gespeichert. In der zweiten Alternative wird die Datenverarbeitungseinrichtung von außen mit darzustellenden Inhalten angesteuert. Falls die Bildschirme direkt von außen mit darzustellenden Inhalten angesteuert werden, entfällt eine Datenverarbeitungseinrichtung in der Haltevorrichtung. Stattdessen ist ein Server vorgesehen, der eine oder mehrere der erfindungsgemäßen Haltevorrichtungen mit Strom und/oder mit darzustellenden Daten versorgt.

Vorteilhafte Ausbildungen bestehen darin, dass der wenigstens eine Bildschirm ein LCD-Bildschirm, ein TFT-Bildschirm oder ein Plasma-Bildschirm ist.

Zusätzlich weist die Anzeigevorrichtung vorzugsweise Leuchtkörper auf, insbesondere Leuchtdioden, Lampen und/oder Leuchtstoffröhren, die für verschiedene Zwecke einsetzbar sind. Leuchtkörper werden als weitere Informationsquelle verwendet, beispielsweise um einen Fahrstatus oder Haltestatus eines öffentlichen Verkehrsmittels anzuzeigen, als Leselampe oder als allgemeine Raumbeleuchtung.

Eine vorteilhafte Ausbildung der Haltevorrichtung besteht darin, dass die Anzeigevorrichtung wenigstens teilweise aus einem durchsichtigen Polycarbonat besteht, in dem der Bildschirm und/oder die Leuchtkörper eingebettet sind. Auf diese Weise sind der Bildschirm und/oder die Leuchtkörper von außen sichtbar und gleichzeitig gegen Beschädigungen geschützt.

Wenn die Haltevorrichtung einen Formkörper umfasst, der wenigstens teilweise als Produktform, Verpackungsform oder in Form einer Person, einer Pflanze oder eines Tieres oder von Symbolen, insbesondere Buchstaben, ausgeformt ist, tritt eine weitere Funktionalität hinzu. Mittels eines Formkörpers wird eine Identifikation oder eine weitere Werbebotschaft vermittelt. Dabei ist vorzugsweise vorgesehen, dass der Formkörper mit der Anzeigevorrichtung und/oder der Befestigungsvorrichtung und/oder der Haltevorrichtung verbunden ist. Weiter vorzugsweise ist der Formkörper in die Anzeigevorrichtung und/oder die Befestigungsvorrichtung und/oder die Haltevorrichtung integriert.

Die der Erfindung zugrunde liegende Aufgabe wird auch gelöst durch ein Haltevorrichtungssystem, umfassend einen Server und wenigstens eine Haltevorrichtung gemäß der Erfindung, wobei die wenigstens eine Haltevorrichtung durch den Server mit darzustellenden Daten versorgbar ist. Mittels dieses Haltevorrichtungssystems ist es möglich, eine oder mehrere Haltevorrichtungen zentral mit gleichen oder unterschiedlichen dazustellenden Inhalten zu versorgen und eine erweiterte Logik zu erreichen, beispielsweise Haltestelleninformationen gleichzeitig, Werbung aber individuell anzuzeigen. Die Haltevorrichtungen benötigen in diesem Fall keinen eigenen Speicher.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Darstellung einer erfindungsgemäßen Haltevorrichtung,
- Fig. 2: eine erfindungsgemäße Haltevorrichtung in schematischer Seitendarstellung,
- Fig. 3: ein weiteres Ausführungsbeispiel einer erfindungsgemäßen Haltevorrichtung in schematischer Seitenansicht,
- Fig.4: ein weiteres Ausführungsbeispiel einer erfindungsgemäßen Haltevorrichtung in schematischer Seitenansicht,
- Fig. 5: ein weiteres Ausführungsbeispiel einer erfindungsgemäßen Haltevorrichtung in schematischer Darstellung.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

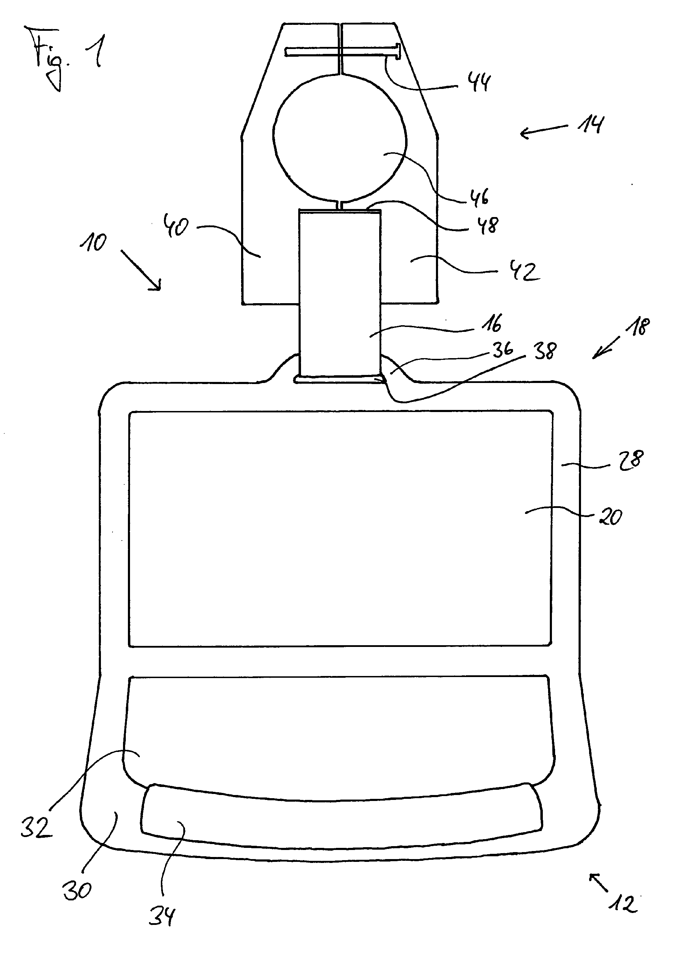

In Fig. 1 ist eine erfindungsgemäße Haltevorrichtung 10 in Draufsicht schematisch dargestellt. Die Haltevorrichtung 10 umfasst einen Handgriffkörper 12, der aus einem Handgriff 30 mit einer Handgrifföffnung 32 und einer Polsterung 34 für eine Hand besteht, sowie eine Einfassung 28 mit einem Bildschirm 20 zur Darstellung von Texten, Bildern und Filmen. Der Handgriffkörper 12 ist mit der Anzeigevorrichtung 18, die den Bildschirm 20 umfasst, einstückig ausgeführt. Die Anzeigevorrichtung 18 umfasst eine Halterung 36 mit einer Öffnung 38 für eine Verbindungsvorrichtung 16, die im Ausführungsbeispiel von Fig. 1 als umlaufende Schlaufe ausgeführt ist.

Der Bildschirm hat eine Diagonale von 7 Zoll (ca. 18 cm) und 800x480 Bildpunkte in einer möglichen Ausführungsform.

Die Befestigungsvorrichtung 14 besteht aus einem zweiteiligen Befestigungsgrundkörper 40, 42, der mittels einer Verbindungsschraube 44 im oberen Teil und einer nicht dargestellten, von der Verbindungsvorrichtung 16 verdeckten Verbindungsschraube im unteren Teil zusammengehalten wird. Zwischen den Befestigungsgrundkörpern 40, 42 ist eine kreisrunde Öffnung 46 für eine Haltstange ausgebildet. Die Befestigungsvorrichtung 14 umfasst weiterhin eine Öffnung 48 für die Schlaufe bzw. die Verbindungsvorrichtung 16.

Die in Fig. 1 dargestellte Haltevorrichtung 12 wird beispielsweise in Bussen eingesetzt, wobei die Befestigungsvorrichtung 14 an einer Haltestange, die parallel zur Decke angeordnet ist, befestigt wird, so dass sie nicht verrutscht. Die als Schlaufe ausgebildete Verbindungsvorrichtung 16 sorgt für die notwendige Flexibilität, so dass Fahrgäste, die sich an der Haltevorrichtung 10 festhalten, Beschleunigungskräfte im Fahrzeug ausgleichen können.

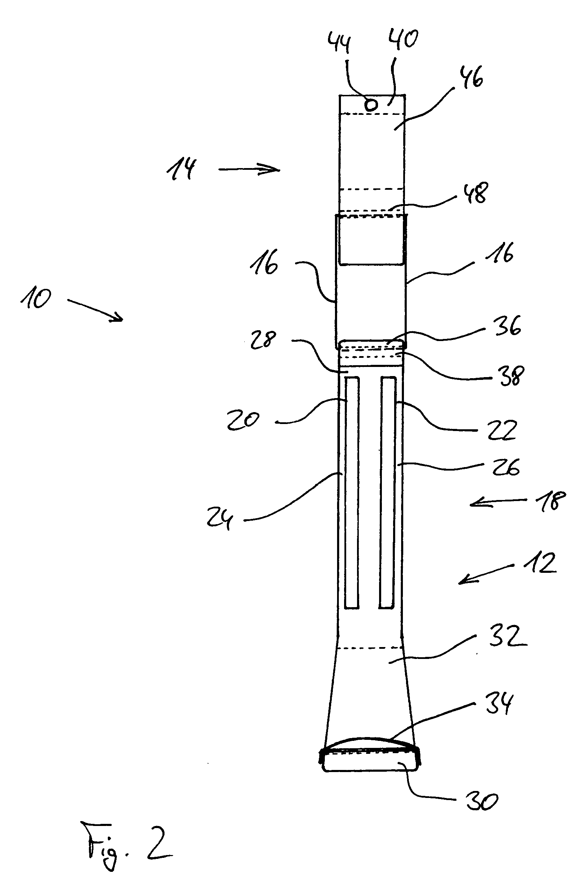

In Fig. 2 ist die Haltevorrichtung 10 aus Fig. 1 in einer Seitenansicht schematisch dargestellt. Durchbrüche bzw. Öffnungen in der Befestigungsvorrichtung und im Handgriffkörper sind mit gestrichelten Linien dargestellt. Weiter ist zu sehen, dass die Anzeigevorrichtung 18 zwei Bildschirme 20, 22 aufweist, die Rücken an Rücken angeordnet sind, so dass die Darstellung zu beiden Seiten der flächigen Haltevorrichtung 10 erfolgt.

Die Bildschirme 20, 22 sind vollständig in die Anzeigevorrichtung 18, die einstückig mit dem Handgriffkörper 12 ausgebildet ist, eingelassen. Die Anzeigevorrichtung 18 besteht dabei beispielsweise aus einem transparenten Polycarbonat, so dass die Bildschirme 20, 22 durch transparente Flächen 24, 26 von außen getrennt sind und durch diese transparenten Flächen 24, 26 sichtbar sind.

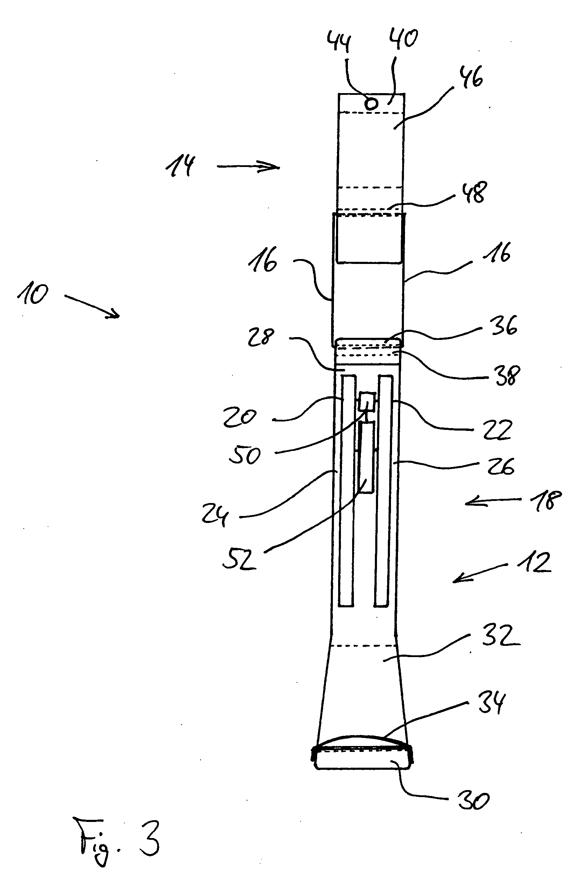

In Fig. 3 ist zusätzlich zu den in Fig. 2 dargestellten Elementen der Haltevorrichtung 10 dargestellt, dass die Bildschirme 20, 22 durch eine gemeinsame Stromquelle 50 mit Strom versorgt werden. Außerdem ist eine gemeinsame Datenverarbeitungseinrichtung 52 dargestellt, die, wie die Stromquelle 50, zwischen den Bildschirmen 20, 22 angeordnet ist und von außen nicht sichtbar ist. Beide Bildschirme 20, 22 werden von der Datenverarbeitungseinrichtung 52 mit darzustellenden Inhalten versorgt. Diese können auch jeweils für die Bildschirme 20 und 22 verschieden sein.

Die Datenverarbeitungseinrichtung 52 im in Fig. 3 dargestellten Ausführungsbeispiel weist auch eine Speichervorrichtung auf, in der die darzustellenden Inhalte gespeichert sind.

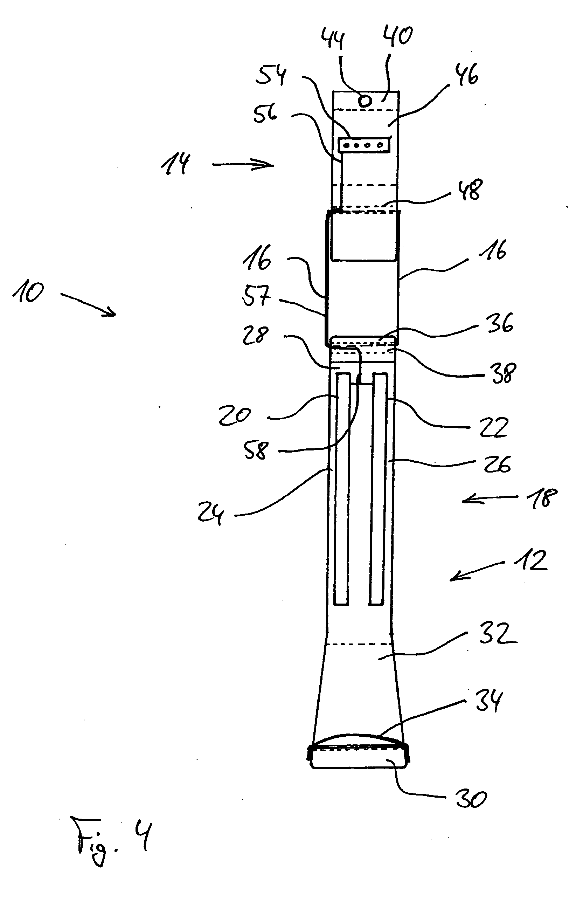

In Fig. 4 ist ein weiteres Ausführungsbeispiel einer erfindungsgemäßen Haltevorrichtung 10 gemäß Fig. 2 dargestellt. Im Unterschied zu Fig. 3 ist in Fig. 4 vorgesehen, dass die Befestigungsvorrichtung 14 in ihrer Öffnung 46 für die Haltestange einen Anschluss 54 für eine Stromversorgung und für anzuzeigende Daten umfasst. Schematisch ist ein Anschluss 54 mit vier Kontaktstellen dargestellt. Von dem Anschluss 54 führt eine Leitung 56 durch die Befestigungsvorrichtung 14 zur Verbindungsvorrichtung 16, wo die Leitung 57 an oder in der Verbindungsvorrichtung 16 zur Anzeigevorrichtung 18 weitergeführt wird und in diese eindringt. In der Anzeigevorrichtung 18 wird die Leitung 58 für die Stromversorgung und die anzuzeigenden Daten zu den Bildschirmen 20, 22 geführt, wodurch diese mit Strom und anzuzeigenden Informationen versorgt werden.

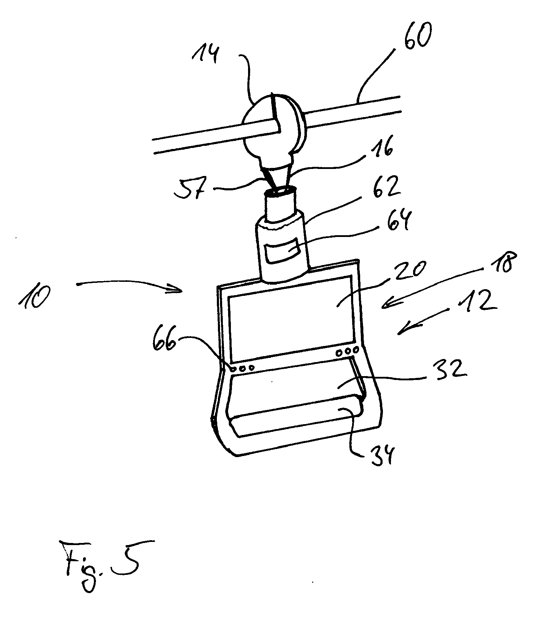

In Fig. 5 ist ein weiteres Ausführungsbeispiel einer erfindungsgemäßen Haltevorrichtung 10 dargestellt. In diesem Ausführungsbeispiel ist die Haltevorrichtung an einer Haltestange 60, die sich beispielsweise in einem Bus befindet, und in deren Inneren nicht dargestellte Strom- und Datenleitungen verlaufen, mittels einer Befestigungsvorrichtung 14 mit einem nicht dargestellten Anschluss 54 gemäß Fig. 4 fest verbunden. Über den nicht dargestellten Anschluss 54 nimmt die Befestigungsvorrichtung 14 von der Haltestange 60 die Spannungsversorgung und die Datenversorgung für die Bildschirme 20, 22 und Leuchtkörper 66 ab. Die Leuchtkörper 66 dienen Dekorations- oder Informationszwecken.

Über eine Verbindungsvorrichtung 16 in Gestalt einer Schlaufe ist der Handgriffkörper 12 und die einstückig mit dem Handgriffkörper 12 ausgebildete Anzeigevorrichtung 18 mit der Befestigungsvorrichtung 14 verbunden. Die Verbindungsvorrichtung 16 umfasst eine Leitung 57 für die Stromversorgung und für die Versorgung der Bildschirme 20, 22 mit anzuzeigenden Daten.

Einstückig mit der Anzeigevorrichtung 18 ist an deren oberen Ende ein Formkörper 62 in Form einer Flasche mit einem Etikett 64 ausgebildet. Die dargestellte Flasche ist beispielsweise eine Flasche eines Getränks, einer Medizin in Pillenform oder in flüssiger Form oder ein Flakon eines Parfüms, so dass für das entsprechende Produkt geworben wird. Auf dem Bildschirm 20 können entsprechend Werbung oder Informationen zu dem Produkt angezeigt werden.

Alternative Formbeispiele für den Formkörper sind Nahrungs- oder Genussmittel, Textilien, Schuhwerk, Automobile, Flugzeuge, Kosmetikprodukte, Möbelstücke, Elektroprodukte, Computer- oder Computerzubehörprodukte, Immobilien, Pflanzen, Personen, Tiere, Symbole wie beispielsweise Buchstaben. Durch geeignete Wahl wird somit auf die Corporate Identity eines Unternehmens, eines Verkehrsbetriebes oder Verkehrsverbundes hingewiesen, das diese Handvorrichtungen einsetzt.

### Bezugszeichenliste

- 10: Haltevorrichtung
- 12: Handgriffkörper
- 14: Befestigungsvorrichtung
- 16: Verbindungsvorrichtung
- 18: Anzeigevorrichtung
- 20, 22: Bildschirm
- 24, 26: transparente Fläche
- 28: Einfassung
- 30: Handgriff
- 32: Handgrifföffnung
- 34: Polsterung
- 36: Halterung
- 38: Öffnung für Verbindungsvorrichtung
- 40, 42: zweiteiliger Befestigungsgrundkörper
- 44: Verbindungsschraube
- 46: Öffnung für Haltestange
- 48: Öffnung für Verbindungsvorrichtung
- 50: Stromquelle
- 52: Datenverarbeitungseinrichtung
- 54: Anschluss für Stromversorgung und/oder anzuzeigende Daten
- 56, 57, 58: Leitung für Stromversorgung und/oder anzuzeigende Daten
- 60: Haltestange
- 62: Formkörper
- 64: Etikett
- 66: Leuchtkörper

## Patentansprüche

1. Haltevorrichtung (10) mit einem Handgriffkörper (12) mit einer Handgriffmulde oder Handgrifföffnung (32), einer Befestigungsvorrichtung (14) und einer Verbindungsvorrichtung (16), mittels der der Handgriffkörper (12) mit der Befestigungsvorrichtung (14) verbunden ist, **dadurch gekennzeichnet, dass** die Haltevorrichtung (10) eine Anzeigevorrichtung (18) aufweist, die wenigstens einen Bildschirm (20, 22) umfasst.

2. Haltevorrichtung (10) nach Anspruch 1, **dadurch gekennzeichnet, dass** die Anzeigevorrichtung (18) zwischen dem Handgriffkörper (12) und der Befestigungsvorrichtung (14) angeordnet ist.

3. Haltevorrichtung (10) nach Anspruch 1 oder 2, **dadurch gekennzeichnet, dass** die Anzeigevorrichtung (18) in den Handgriffkörper (12), in die Verbindungsvorrichtung (16) und/oder in die Befestigungsvorrichtung (14) integriert ist.

4. Haltevorrichtung (10) nach einem der Ansprüche 1 bis 3, **dadurch gekennzeichnet, dass** die Befestigungsvorrichtung (14) in die Verbindungsvorrichtung (16) integriert ist.

5. Haltevorrichtung (10) nach einem der Ansprüche 1 bis 4, **dadurch gekennzeichnet, dass** die Haltevorrichtung (10) zwei Bildschirme (21, 22) umfasst, die an unterschiedlichen Seiten der Haltevorrichtung (10) angebracht sind.

6. Haltevorrichtung (10) nach einem der Ansprüche 1 bis 5, **dadurch gekennzeichnet, dass** die Haltevorrichtung (10) eine Stromquelle (50) für den wenigstens einen Bildschirm (20, 22) umfasst.

7. Haltevorrichtung (10) nach einem der Ansprüche 1 bis 5, **dadurch gekennzeichnet, dass** die Haltevorrichtung (10) einen Anschluss (54) für eine Stromversorgung für den wenigstens einen Bildschirm (20, 22) umfasst.

8. Haltevorrichtung (10) nach einem der Ansprüche 1 bis 7, **dadurch gekennzeichnet, dass** die Haltevorrichtung (10) eine Datenverarbeitungseinrichtung (52) zur Versorgung des wenigstens einen Bildschirms (20, 22) mit Daten umfasst.

9. Haltevorrichtung (10) nach einem der Ansprüche 1 bis 7, **dadurch gekennzeichnet, dass** die Haltevorrichtung (10) einen Anschluss (54) für auf dem Bildschirm (20, 22) darzustellende Daten umfasst.

10. Haltevorrichtung (10) nach einem der Ansprüche 1 bis 9, **dadurch gekennzeichnet, dass** der wenigstens eine Bildschirm (20, 22) ein LCD-Bildschirm, ein TFT-Bildschirm oder ein Plasma-Bildschirm ist.

11. Haltevorrichtung (10) nach einem der Ansprüche 1 bis 10, **dadurch gekennzeichnet, dass** die Anzeigevorrichtung (18) Leuchtkörper (66), insbesondere Leuchtdioden, Lampen und/oder Leuchtstoffröhren aufweist.

12. Haltevorrichtung (10) nach einem der Ansprüche 1 bis 11, **dadurch gekennzeichnet, dass** die Anzeigevorrichtung (18) wenigstens teilweise aus einem durchsichtigen Polycarbonat besteht, in dem der Bildschirm und/oder die Leuchtkörper eingebettet sind.

13. Haltevorrichtung (10) nach einem der Ansprüche 1 bis 12, **dadurch gekennzeichnet, dass** die Haltevorrichtung (10) einen Formkörper (62) umfasst, der wenigstens teilweise als Produktform, Verpackungsform oder in Form einer Person, einer Pflanze oder eines Tieres oder von Symbolen, insbesondere Buchstaben, ausgeformt ist.

14. Haltevorrichtung (10) nach Anspruch 13, **dadurch gekennzeichnet, dass** der Formkörper (62) mit der Anzeigevorrichtung (18) und/oder der Befestigungsvorrichtung (14) und/oder der Haltevorrichtung (10) verbunden ist.

15. Haltevorrichtung (10) nach Anspruch 13 oder 14, **dadurch gekennzeichnet, dass** der Formkörper (62) in die Anzeigevorrichtung (18) und/oder die Befestigungsvorrichtung (14) und/oder die Haltevorrichtung (10) integriert ist.

16. Haltevorrichtungssystem, umfassend einen Server und wenigstens eine Haltevorrichtung (10) nach einem der Ansprüche 1 bis 15, wobei die wenigstens eine Haltevorrichtung (10) durch den Server mit darzustellenden Daten versorgbar ist.
